# EUROPÄISCHE PATENTSCHRIFT

(11) **EP 0 431 336 B1**
(45) Veröffentlichungstag und Bekanntmachung des Hinweises auf die Patenterteilung: **01.09.1993**
(21) Anmeldenummer: 90121342.1
(22) Anmeldetag: 08.11.1990
(51) Int. Cl.: C09J 7/00

(54) **Trägerloses, beidseitig klebendes Selbstklebeband**
Unsupported double-face self-adhesive tape
Ruban autoadhésif, collant sur les deux faces, sans support

(30) Priorität: 02.12.1989 DE 3940001; 21.09.1990 DE 4029896
(43) Veröffentlichungstag der Anmeldung: 12.06.1991
(73) Patentinhaber: Beiersdorf Aktiengesellschaft, 20245 Hamburg (DE)
(72) Erfinder: Schacht, Wolfgang, Dr., W-2000 Hamburg 36 (DE); Nagel, Christoph, W-2000 Hamburg 70 (DE)

(56) Entgegenhaltungen:
- WO-A-89/00106
- DE-A- 2 821 606
- US-A- 4 223 067

## Beschreibung

Die Erfindung betrifft ein trägerloses, beidseitig klebendes Selbstklebeband (ein sogenanntes Fix), insbesondere zur dauerhaften Verklebung von Gegenständen mit Unebenheiten in den zu verklebenden Oberflächen.

Zu diesem Zweck werden bisher beidseitig mit Klebstoff beschichtete Schaumfolien verwendet, die sich den Unebenheiten der Oberflächen anpassen, die jedoch trotz beachtlichem wirtschaftlichem Erfolg in ihrer praktischen Anwendbarkeit beschränkt sind, eben wegen ihres Schaum-Trägers.

Da dickere Klebstoffschichten als solche das Problem nicht lösen, ist vorgeschlagen worden, entweder die Klebmasse selbst aufzuschäumen oder mikrozellular auszurüsten. Während das Aufschäumen wegen vorzeitigem Zusammenbrechen der Bläschen nicht zu praktikablen Produkten führt, sind mikrozellulare Produkte bekannt durch die DE-PS 2.105.877. Ein derartiger Klebestreifen paßt sich unregelmäßigen Oberflächen an, indem bestimmte Mikrozellen in der mikrozellularen Klebstoffschicht unter dem lokalen hohen Druck, der durch Vorsprünge oder Wölbungen verursacht wird, zusammenbrechen, während die anderen unversehrten Zellen in dem mikrozellularen Zustand verbleiben (Sp. 3, Z. 21-27). Auch die DE-PS 2.821.606 beschreibt solche Klebebänder, die sich insbesondere dadurch auszeichnen, daß ihnen die elastische Erholung fehlt, nachdem der Druck eine zeitlang aufrecht erhalten wurde (S. 1, Z. 37 und Z. 65). Dies deswegen, weil die Oberflächen an den gegenüberliegenden Seiten jeder Zelle aneinander haften und eine Erholung verhindern (S. 1, Z. 43/44).

Klebebänder dieses Typs beschreibt auch die EP-OS 257.984, nämlich solche mit Hohlräumen bzw. hohlen "Microsphäroiden" aus nicht-klebrigen thermoplastischen Polymeren (vgl . S. 1, Z. 6/7 und S. 2, Z. 15), deren Vorteile gegenüber ungefüllten Systemen bzw. solchen mit Glasmikrohohlkugeln herausgestellt werden (S. 4, Z. 10-12).

Auch die W/O 89/00106 beschreibt schaumartige Klebebänder (Einleitung S. 1, Z. 17) mit "low density micropheres" im Träger (S. 3, Z. 15/16). Diese schaumartigen Klebebänder zeichnen sich aus durch niedrige Elastizität (S. 4, Z. 23-25), entsprechen damit in ihrem prinzipiellen Bautyp den oben beschriebenen (z.B. DE-PS 2.821.606), wobei die "low density micropheres" die Dichte des Trägers reduzieren (S. 12, Z. 30/31 ), obgleich gemäß S. 13, Z. 1 - 5 diese Teilchen massiv, hohl oder porös sowie spröde oder elastomer sein können und aus Glas, Keramik, Polymeren oder Kohlenstoff-Material sein können. Die Dichte dieser "low density microspheres" einschließlich der spröden/festen beträgt weniger als 1,0 g/cm³ (S. 14, Z. 6 - 8) und gibt den beschriebenen Klebebändern eben den gewünschten schaumartigen Charakter.

Derartige Klebebänder haben jedoch neben ihren unbestrittenen Vorteilen auch eine Reihe von Nachteilen, die sich bei der praktischen Anwendung und auch bei ihrer Herstellung zeigen. So sind Glasmikrohohlkugeln empfindliche Partikel, die schon beim Lagern, erst recht aber beim Einarbeiten in eine Klebmasse splittern können, mit Folgeproblemen aufgrund der entstehenden Splitter. Zudem bilden die Hohlräume in der Klebmasse eindringenden Lösungsmitteln Ansätze für unerwünschte Wege durch das Band, ebenso Ansätze für seitliches Eintreten von Lösungsmitteln und Wasser in eine Klebfuge, etwa in der Praxis bei damit aufgeklebten Zierleisten im Automobilbau. Systembedingt haben derartige schaumartige Klebebänder nicht die Vorteile von völlig hohlraumfreien Produkten.

Aufgabe der Erfindung war es, hier Abhilfe zu schaffen, insbesondere ein trägerloses Fix zu schaffen, das die Nachteile des Standes der Technik nicht oder nicht in dem Ausmaß aufweist, dennoch aber zu dauerhaften Verklebungen führt, wie sie insbes. im Automobilbau zum Verkleben von Zierleisten, Stoßstangen und dergl. gefordert werden.

Gelöst wird diese Aufgabe durch Selbstklebebänder, wie sie in den Ansprüchen näher gekennzeichnet sind.

Bei vergleichenden Untersuchen über die Auswirkungen von in Klebmassen dispergierten Glasmikrovoll- und -hohlkugeln auf die klebtechnischen Eigenschaften entsprechender Klebestreifen wurde überraschend gefunden, daß der Einsatz von Glasmikrovollkugeln zu deutlich belastbareren Verklebungen führt.

Die Herstellung der erfindungsgemäßen Selbstklebebänder kann in an sich bekannter Weise erfolgen. So können z.B. in einem durch radikalische Polymerisation hergestellten Copolymerisat aus Butylacrylat, iso-Octylacrylat und Acrylsäure, das in einem Gemisch aus Benzin, Aceton und Isopropanol gelöst vorliegt nach Zugabe eines chemischen Vernetzersystems Glasmikrovollkugeln dispergiert werden. Die erhaltene Abmischung wird auf einer Oberfläche geringer Adhäsion, von der die Klebstoffschicht leicht wieder entfernt werden kann, ausgestrichen und getrocknet, so daß man eine Klebstoffschicht mit einer Dicke von etwa 100 µm erhält. Drei dieser Schichten können unter Vermeidung jeglicher Lufteinschlüsse und unter Entfernung der Hilfsträger niedriger Adhäsion aufeinander laminiert werden. Abschließend werden beide Seiten des dann etwa 300 µm dicken glasvollkugelkgefüllten Klebestreifens analog mit je einer etwa 50 µm dicken Klebstoffschicht des obengenannten Copolymerisates, jedoch ohne darin dispergierte Glasmikrovollkugeln und mit einem niedrigeren Vernetzergehalt, beschichtet. Vernetzt wird in an sich bekannter Weise thermisch, ggf. auch durch UV-Bestrahlung oder dergleichen, und abschließend wird das Produkt einseitig oder beidseitig mit einem Trennpapier oder einer Trennfolie eingedeckt und ggf. geschnitten und zu Rollen gewickelt.

Eine andere Möglichkeit, ein erfindungsgemäßes Klebeband herzustellen, besteht darin, zunächst evtl. schon mit Glasmikrovollkugeln und Pigmenten abgemischte Klebmasselösung vom Lösemittel zu befreien, z.B. durch Ausstreichen auf Trennpapier und Trocknung an einer üblichen Kanaltrockenanlage oder in einem Extruder mit mindestens einer Vakuumzone. Die weitgehendst lösungsmittelfreie Masse wird anschließend in einen handelsüblichen Extruder eingespeist. Soweit nicht schon vor dem Trocknen erfolgt, können durch eine entsprechende Zudosiereinrichtung die Glasmikrovollkugeln sowie Pigmente eingearbeitet werden. Zweckmäßig ist, im Extruder mindestens eine Vakuumzone vorzusehen, so daß alle Lufteinschlüsse entfernt werden können.

Durch entsprechende Einstellung des Extrusionsspaltes kann die Mittelschicht des Klebebandes in einer Dicke von etwa 200 - 2100 µm in einer Stufe hergestellt werden. Günstig ist es, um die beidseitig vorteilhaften ca. 50 µm dicken Schichten aus ungefüllter Klebmasse aufzubringen, direkt auf ein schon mit Klebmasse beschichtetes Trennpapier zu extrudieren. So muß anschließend lediglich noch eine Schicht auf die offene Seite zukaschiert werden. Die beiden ungefüllten Klebmasseschichten können sowohl aus einer lösungsmittelfreien Beschichtung aus einem Extruder als auch aus einer Beschichtung von lösungsmittelhaltiger Klebmasse stammen.

Eine vorteilhafte Vernetzung des Klebebandes kann nach den oben erwähnten bekannten Methoden erfolgen, insbesondere aber durch Elektronenstrahlvernetzung. Dabei kann durchaus die glasmikrovollkugelgefüllte Mittelschicht vor Aufbringen der ungefüllten Deckschichten elektronenstrahlvernetzt und die Deckschichten chemisch vernetzt werden oder aber der Gesamtverbund elektrononenstrahlvernetzt werden. Weitere Vernetzungskombinationen sind gleichfalls möglich.

### Beispiel

Nach der Polymerisationsvorschrift der DE-PS 1 569 898 (Beispiel 1) wurde ein Copolymerisat hergestellt. Dabei wurde anstelle der dort angegebenen Monomeren und Gewichtsanteile 460 Gewichtsanteile n-Butylacrylat, 460 Gewichtsanteile 2-Ethylhexylacrylat und 80 Gewichtsanteile Acrylsäure eingesetzt. Der Feststoffgehalt der erhaltenen Copolymerisatlösung betrug 43 %, der K-Wert des Copolymerisates 52. Zu der Lösung wurden 200 Gewichtsanteile Isopropanol und 530 Gewichtsanteile einer 3%igen Lösung von Tyzor AA (Fa. DuPont) in Essigsäureethylester als Vernetzerkomponenten zugegeben.

Zur Herstellung eines doppelseitigen Klebebandes aus der erhaltenen Klebmasselösung wurde folgendermaßen vorgegangen:
a) Unter Verwendung einer üblichen Beschichtungseinrichtung wurden bei einer Spalteinstellung von 0,15 mm auf zwei unterschiedlichen silikonbeschichteten Papierträgern höherer bzw. geringerer Releasewirkung Ausstriche hergestellt. Es wurde 10 min bei 80°C getrocknet. Das Flächengewicht der erhaltenen Klebmasseschicht betrug 50 g/m².
b) In die oben beschriebene Klebmasselösung wurden 10 Volumenanteile (bezogen auf Festsubstanz) Glasmikrovollkugeln mit einem mittleren Durchmesser von 0,40 µm (Fa. Potters-Ballotini GmbH) eingerührt. Es wurde über Nacht stehengelassen, damit die eingerührten Luftblasen entweichen konnten. Am nächsten Tag wurde mit niedrigen Drehzahlen gerührt bis die Mikroglaskugeln wieder homogen verteilt waren. Die erhaltene Suspension wurde analog dem Verfahren unter a) bei einer Spalteinstellung von 0,25 mm auf das silikonbeschichtete Papier höherer Releasewirkung ausgestrichen und ebenfalls 10 min. bei 80°C getrocknet. Es wurde eine Klebmasseschicht von 80 g/m2 erhalten.
c) Auf den unter a) hergestellten Ausstrich auf dem Papier mit geringerer Releasewirkung wurde ein unter b) hergestellter Ausstrich zwischen zwei auf 80°C geheizten Gummiwalzen mit einer Geschwindigkeit von 2 m/min auflaminiert. Das Papier mit hoher Releasewirkung wurde entfernt. Auf den erhaltenen Verbund wurden analog noch drei weitere der unter b) hergestellten Ausstriche laminiert. Abschließend wurde der unter a) auf dem Papier höherer Releasewirkung hergestellte Ausstrich analog auflaminiert und der Gesamtverbund 15 min bei 130°C vernetzt.

Das so erhaltene beidseitig abgedeckte doppelseitige Klebeband mit einer Dicke von 0,42 mm wurde in Streifen von 20 mm Breite geschnitten. Die beiden Abdeckungen aus silikonbeschichtetem Papier unterschiedlicher Releasewirkung gestatten es problemlos, die Abdeckung höherer Releasewirkung zu entfernen, ohne daß es zum Ablösen des Klebebandes von der verbleibenden Abdeckung kam. War die Rückseite der verbleibenden Abdeckung mit einer Silikonbeschichtung höherer Releasewirkung versehen, so ließen sich die Streifen zu einer Rolle aufwickeln, von der sich das Material problemlos wieder abwickeln und applizieren ließ.

Sowohl bei der Scherbelastbarkeit als auch bei anderen Prüfungen ergaben sich hervorragende Werte.

## Patentansprüche

1. Trägerloses, beidseitig klebendes Selbstklebeband aus einer druckempfindlichen Klebstoffschicht von mehr als 200 µm Dicke, enthaltend Glasmikrovollkugeln von mehr als 1,5 g/cm³ Dichte.

2. Selbstklebeband nach Anspruch 1, enthaltend 1 - 50, insbesondere 3 - 40, ganz besonders 7 - 30 Volumenteile Glasmikrovollkugeln mit einem mittleren Durchmesser von 10 - 100, insbesondere 30 - 60 µm und einer Dichte von 1,8 - 7,2, insbesondere 1,9 - 4,2, ganz besonders 2 - 3 g/cm³.

3. Selbstklebeband nach Anspruch 1, dadurch gekennzeichnet, daß auf der die Glasmikrovollkugeln enthaltenden Klebstoffschicht einseitig oder insbesondere beidseitig eine weitere druckempfindliche Klebstoffschicht aufgebracht ist, in einer Dicke von 10 - 100, insbesondere 20 - 80, ganz besonders 40 - 60 µm.

4. Selbstklebeband nach Anspruch 1 oder 3, dadurch gekennzeichnet, daß die druckempfindlichen Klebstoffschichten aus in organischen Lösungsmitteln löslichen und chemisch oder physikalisch vernetzbaren Copolymeren bestehen, die zu mehr als 80 Gewichtsteilen Alkylacrylate mit 4 - 12 C-Atomen in der Alkylkette enthalten.

5. Selbstklebeband nach Anspruch 1 oder 3, gekennzeichnet durch eine Dicke von 200 - 2100, insbesondere 250 - 1500, ganz besonders 300 - 800 µm.

6. Selbstklebeband nach Anspruch 1, dadurch gekennzeichnet, daß die mit Glasmikrovollkugeln gefüllte Klebstoffschicht eingefärbt ist, insbesondere mit Farbstoffen oder Pigmenten, insbesondere Ruß.

7. Selbstklebeband nach Anspruch 1, dadurch gekennzeichnet, daß es einseitig oder insbesondere beidseitig mit einem Trennpapier oder einer Trennfolie abgedeckt ist, bzw. einseitig abgedeckt und zur Rolle aufgewickelt ist.

8. Selbstklebeband nach Anspruch 3, dadurch gekennzeichnet, daß die die Glasmikrovollkugeln enthaltende Klebstoffschicht eine solche vom Typ hotmelt ist, die ggf. chemisch oder physikalisch vernetzt ist.

## Claims

1. Double-sided self-adhesive tape without a backing, consisting of a pressure-sensitive adhesive layer of more than 200 µm in thickness and containing solid glass microspheres of more than 1.5 g/cm³ in density.

2. Self-adhesive tape according to Claim 1, containing 1 - 50, in particular 3 - 40, very particularly 7 - 30, parts by volume of solid glass microspheres having an average diameter of 10 - 100, in particular 30 - 60 µm, and a density of 1.8 - 7.2, in particular 1.9 - 4.2, very particularly 2 - 3, g/cm³.

3. Self-adhesive tape according to Claim 1, characterized in that a further pressure-sensitive adhesive layer is applied to the adhesive layer containing the solid glass microspheres, on one side or in particular on both sides in a thickness of 10 - 100, in particular 20 - 80, very particularly 40 - 60 pm.

4. Self-adhesive tape according to Claim 1 or 3, characterized in that the pressure-sensitive adhesive layers are composed of copolymers soluble in organic solvents and crosslinkable chemically or physically and containing more than 80 parts by weight of alkyl acrylates of 4 - 12 C atoms in the alkyl chain.

5. Self-adhesive tape according to Claim 1 or 3, characterized by a thickness of 200 - 2100, in particular 250 - 1500, very particularly 300 - 800, µm.

6. Self-adhesive tape according to Claim 1, characterized in that the adhesive layer filled with solid glass microspheres is coloured, in particular with dyes or pigments, in particular carbon black.

7. Self-adhesive tape according to Claim 1, characterized in that it is covered on one side or in particular on both sides with a release paper or a release sheet, or is covered on one side and wound to a roll.

8. Self-adhesive tape according to Claim 3, characterised in that the adhesive layer containing the solid glass microspheres is one of the hot-melt type which may have been crosslinked by chemical or physical means.

## Revendications

1. Ruban autoadhésif, sans support, collant sur les deux faces, produit à partir d'une couche d'adhésif sensible à la pression, d'épaisseur supérieure à 200 µm, comprenant des microbilles de verre pleines de densité supérieure à 1,5 g/cm³.

2. Ruban autoadhésif selon la revendication 1, comprenant de 1 à 50, en particulier de 3 à 40, tout particulièrement de 7 à 30 parties par volume de microbilles de verre pleines de diamètre moyen de 10 à 100, en particulier de 30 à 60 µm, et de densité de 1,8 à 7,2, en particulier de 1,9 à 4,2 et tout particulièrement de 2 à 3 g/cm³.

3. Ruban autoadhésif selon la revendication 1, caractérisé en ce que l'on applique, sur une seule face ou en particulier sur les deux faces, une autre couche adhésive sensible à la pression sur la couche adhésive comprenant les microbilles de verre pleines, sur une épaisseur de 10 à 100, en particulier de 20 à 80 et tout particulièrement de 40 à 60 µm.

4. Ruban autoadhésif selon la revendication 1 ou 3, caractérisé en ce que les couches d'adhésif sensibles à la pression consistent en des copolymères réticulables physiquement ou chimiquement et solubles dans des solvants organiques, qui contiennent jusqu'à plus de 80 parties en poids d'acrylate d'alcoyle avec 4 à 12 atomes de carbone dans la chaîne d'alcoyles.

5. Ruban autoadhésif selon la revendication 1 ou 3, caractérisé par une épaisseur de 200 à 2100, en particulier de 250 à 1500, et tout particulièrement de 300 à 800 µm.

6. Ruban autoadhésif selon la revendication 1, caractérisé en ce que la couche d'adhésif chargée de microbilles de verre pleines est teintée, en particulier avec des colorants ou des pigments, en particulier avec du noir de carbone.

7. Ruban autoadhésif selon la revendication 1, caractérisé en ce qu'il est recouvert sur une seule face ou en particulier sur les deux faces, par un papier de séparation ou par une feuille de séparation, ou en ce qu'il est recouvert sur une seule face et enroulé en rouleau.

8. Ruban autoadhésif selon la revendication 3, caractérisé en ce que la couche adhésive contenant les microbilles de verre pleines est une couche du type hotmelt, qui est réticulée, selon le cas, physiquement ou chimiquement.
